# EUROPEAN PATENT APPLICATION

(11) **EP 1 108 592 A2**
(43) Date of publication of application: **20.06.2001**
(21) Application number: 00204504.5
(22) Date of filing: 14.12.2000
(51) Int. Cl.: B60K 15/03

(54) **Permeation barrier fuel tank**

(30) Priority: 18.12.1999 US 172560 P; 16.10.2000 US 690143
(71) Applicant: Delphi Technologies, Inc., Troy, MI 48007 (US)
(72) Inventor: Abus-Isa, Ismat A., Rochester Hills, MI 48309 (US); Jaynes, Craig B., Bloomfield Hills, MI 48302 (US); Short, William T., Southfield, MI 48076 (US)
(74) Representative: Denton, Michael John

(57) **Abstract**

A permeation barrier fuel tank (10) for a vehicle includes a tank shell (12) having a wall (18,20,22,24,26,28) formed from a plurality of layers (30,32,34,36,38,40). The layers (30,32,34,36,38,40) include at least an inner layer (30), an outer layer (40), a first fuel permeation barrier layer (34) disposed between the inner layer (30) and the outer layer (40), a flame resistant layer (42) disposed adjacent the outer layer (40) to retard flame and a second fuel permeation barrier layer (46) disposed between the flame resistant layer (42) and the outer layer (40).

## Description

### TECHNICAL FIELD

The present invention relates generally to fuel tanks for vehicles and, more particularly, to a permeation barrier fuel tank for a vehicle.

### BACKGROUND OF THE INVENTION

It is known to provide a fuel tank such as a plastic fuel tank in a vehicle to hold fuel to be used by an engine of the vehicle. In some vehicles, the plastic fuel tank has an overall thinner wall thickness, than conventional blow-molded tanks, without sacrificing mechanical strength or permeability performance.

Vacuum formed plastic fuel tanks are often made of multi-layer extruded sheets including a permeation barrier and vacuum formed into two shells, one to make the upper half of the fuel tank and the other for the lower half of the fuel tank. The shell halves are fused together in a mold, right after vacuum forming, creating a bond line where the two shell halves are fused. The bond line design is important to insure that the permeation barrier continues to be present in that area. However, there is concern that the permeation barrier is found to thin out or become discontinuous at the bond line during manufacturing. In addition, there is a concern that the fuel tank does not have the desired flammability resistance, since plastics are susceptible to heat or fire damage.

One commercial approach to resolve these concerns is to thicken the tank, which increases the weight, cost, and reduces fuel capacity of the fuel tank, but this does little for flame resistance. Another commercial approach is to protect the fuel tank by metal sheets or shields, which increases the weight and cost of the plastic fuel tank.

Therefore, it is desirable to provide a fuel tank for a vehicle that has a more effective fuel permeation barrier to prevent evaporative emission. It is also desirable to provide a permeation barrier fuel tank for a vehicle that provides flame resistance to a fuel tank.

### SUMMARY OF THE INVENTION

It is, therefore, one object of the present invention to provide a new permeation barrier fuel tank for a vehicle.

It is another object of the present invention to provide a fuel tank that significantly reduces evaporative emission without unduly increasing weight and cost.

It is a further object of the present invention to provide a permeation barrier fuel tank that has a flame resistance.

To achieve the foregoing objects, the present invention is a permeation barrier fuel tank for a vehicle including a tank shell having a wall formed from a plurality of layers. The layers include at least an inner layer, an outer layer, a first fuel permeation barrier layer disposed between the inner layer and the outer layer, a flame resistant layer disposed adjacent the outer layer to retard flame and a second fuel permeation barrier layer disposed between the flame resistant layer and the outer layer.

One advantage of the present invention is that a permeation barrier fuel tank is provided for a vehicle that has enhanced resistance to flame, and to fuel permeation leading to less evaporative emission. Another advantage of the present invention is that the permeation barrier fuel tank incorporates a flame retardant layer and a fuel permeation barrier layer in a single step, resulting in cost savings of the fuel tank when compared to post treatments such as painting, cladding, or sheathing. Yet another advantage of the present invention is that the permeation barrier fuel tank significantly improves barrier properties and increases the effectiveness of the fuel tank with a wider range of fuel compositions, e.g., gasohol, methanol, and hydrocarbon blends. Still another advantage of the present invention is that the permeation barrier fuel tank maintains low weight, ease of design and shaping.

Other objects, features, and advantages of the present invention will be readily appreciated, as the same becomes better understood, after reading the subsequent description taken in conjunction with the accompanying drawings.

### BRIEF DESCRIPTION OF THE DRAWINGS

Figure 1 is a perspective view of a permeation barrier fuel tank, according to the present invention.

Figure 2 is an enlarged fragmentary elevational view of the permeation barrier fuel tank of Figure 1.

Figure 3 is an enlarged fragmentary elevational view of another embodiment, according to the present invention, of the permeation barrier fuel tank of Figure 1.

Figure 4 is an enlarged fragmentary elevational view of yet another embodiment, according to the present invention, of the permeation barrier fuel tank of Figure 1.

### DESCRIPTION OF THE PREFERRED EMBODIMENT

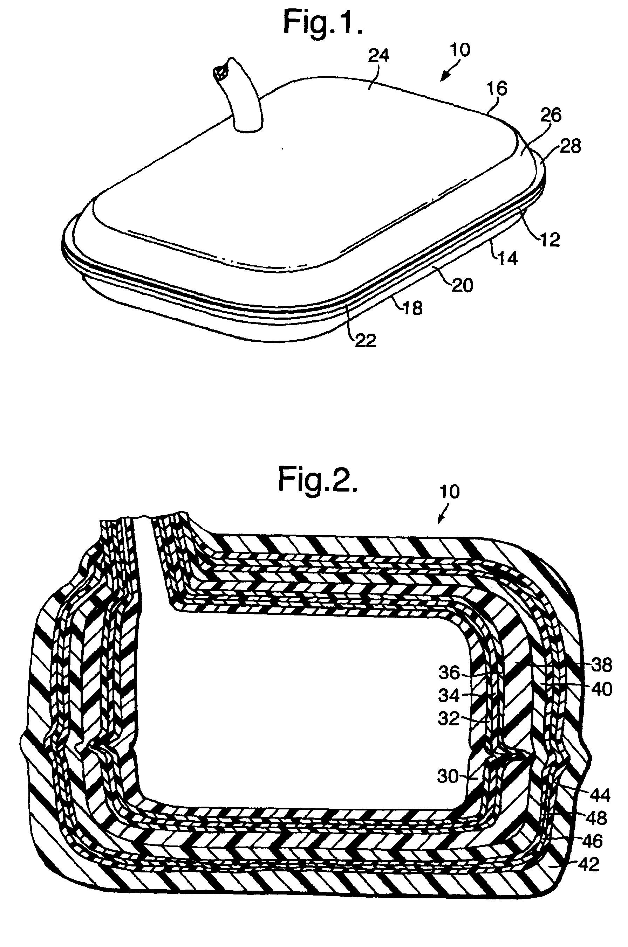

Referring to the drawings and in particular Figures 1 and 2, one embodiment of a permeation barrier fuel tank 10, according to the present invention, is shown for a vehicle (not shown). The permeation barrier fuel tank 10 includes a tank shell 12. In this embodiment illustrated, the tank shell 12 is of a generally rectangular type. The tank shell 12 includes a first or lower half shell 14 and a second or upper half shell 16. The lower half shell 14 has a base wall 18 and a side wall 20 around a periphery of the base wall 18 and extending generally perpendicular thereto. The side wall 20 has a flange 22 extending outwardly and generally perpendicular thereto. The upper half shell 16 has a base wall 24 and a side wall 26 around a periphery of the base wall 24 and extending generally perpendicular thereto. The side wall 26 has a flange 28 extending outwardly and generally perpendicular thereto. The flanges 22 and 28 of the lower half shell 14 and upper half shell 16, respectively, are joined together by suitable means such as by thermoforming, compression molding, or friction welding. The lower half shell 14 and upper half shell 16 are made of a rigid material such as a thermoformable plastic.

Referring to Figures 1 and 2, the permeation barrier fuel tank 10 has the base walls 18,24, side walls 20,26, and flanges 22,28 formed from a plurality of layers 30,32,34,36,38,40. The first or inner layer 30 is made from a high-density polyethylene (HDPE) or similar polyolefin, which is conventional material known in the art. The first layer 30 has a predetermined thickness of approximately two millimeters (2.00 mm). The second layer 32 is a tie-layer made from an adhesive such as a maleated polyethylene (for example, ADMER Grade GT6A), which is a conventional material known in the art. The second layer 32 has a predetermined thickness of approximately 0.1 mm. to 1.0 mm. The third layer 34 is a first permeation barrier layer made from a hydrocarbon barrier material such as ethylene vinyl alcohol (EVOH) copolymer, which is a conventional material known in the art. The third layer 34 has a predetermined thickness of approximately 0.11 mm. The fourth layer 36 is a tie-layer made from an adhesive such as a maleated polyethylene (for example, ADMER Grade GT6A), which is a conventional material known in the art. The fourth layer 36 has a predetermined thickness of approximately 0.1 mm. to 1.0 mm. The fifth layer 38 is made from up to one hundred percent (100%) regrind of a high-density polyethylene (HDPE), which is a conventional material known in the art. The fifth layer 38 has a predetermined thickness of approximately 1.5 mm. The sixth or outer layer 40 is made from a high-density polyethylene (HDPE) or similar polyolefin, which is a conventional material known in the art. The sixth layer 40 has a predetermined thickness of approximately one millimeter (1.00 mm).

The permeation barrier fuel tank 10 includes a flame resistant layer 42 disposed adjacent the sixth layer 40. The flame resistant layer 42 is made from a moldable intumescent polyethylene and chlorinated polyethylene composition, which is disclosed in U.S. Patent No. 4,834,535 to Abu-Isa et al., the disclosure of which is hereby incorporated by reference. The flame resistant layer 42 has a predetermined thickness of approximately one millimeter (1.00 mm).

The permeation barrier fuel tank 10 further includes an attachment layer 44 to attach the flame resistant layer 42 to an outer surface of a second permeation barrier layer 46 to be described. The attachment layer 44 is made from an adhesive such as a maleated polyethylene (for example, ADMER Grade GT6A), which is a conventional material known in the art. The attachment layer 44 has a predetermined thickness of approximately 0.1 mm. to 1.0 mm.

The permeation barrier fuel tank 10 includes a second permeation barrier layer 46 with barrier properties to improve permeation resistance to alcohol or mixed alcohol-hydrocarbon type fuels. The second permeation barrier layer 46 is made from a hydrocarbon barrier material such as a fluorocarbon copolymer or ethylene vinyl alcohol (EVOH), which are conventional materials known in the art. The second permeation barrier layer 46 has a predetermined thickness of approximately 0.11 mm. The second permeation barrier layer 46 is disposed between the flame resistant layer 42 and the sixth or outer layer 40. The flame resistant layer 42 is attached to the second permeation barrier layer 46 with the attachment layer 44. The permeation barrier fuel tank 10 includes a second attachment layer 48 to attach the second permeation barrier layer 46 to the surface of the sixth layer 40. The second attachment layer 48 is made from an adhesive such as a maleated polyethylene (for example, ADMER Grade GT6A), which is a conventional material known in the art. The second attachment layer 48 has a predetermined thickness such as 0.1 mm. to 1.0 mm. It should be appreciated that the second permeation barrier layer 46 added to over the entire outside layer 40 of the fuel tank 10 ensures the presence of a continuous layer of the first permeation barrier layer 34 at the bond line. It should also be appreciated that the flame resistant layer 42 increases flame resistance of the fuel tank 10 and that it is advantageous to introduce both the second permeation barrier layer 46 and the flame resistant layer 42 during the same step.

In manufacturing the permeation barrier fuel tank 10, several conventional processes may be used. Preferably, the permeation barrier fuel tank 10 is formed by a conventional thermoforming process. The flame resistant layer 42 and second permeation barrier layer 46 may be co-extruded together with or without an adhesive. If an adhesive is not used, the second permeation barrier 46, whether it is EVOH, or a more alcohol resistant barrier, is sandwiched between two layers of flame resistant material during co-extrusion. The flame resistant material adheres very well to the high-density polyethylene. Hence, the flame resistant material/barrier co-extruded film will adhere well to the fuel tank and will provide both permeation and flame resistance. Preferably, the flame resistant layer 42 and second permeation barrier layer 46 are simultaneously co-extruded with the other six layers 30,32,34,36,38,40 of the fuel tank sheet and vacuum formed into two shells that are fused together in a mold as previously described. In another embodiment, the permeation barrier fuel tank 10 is formed by a conventional extrusion process wherein the flame resistant layer 42 and second permeation barrier layer 46 are extruded as separate layers that can be incorporated into the multi-layer structure.

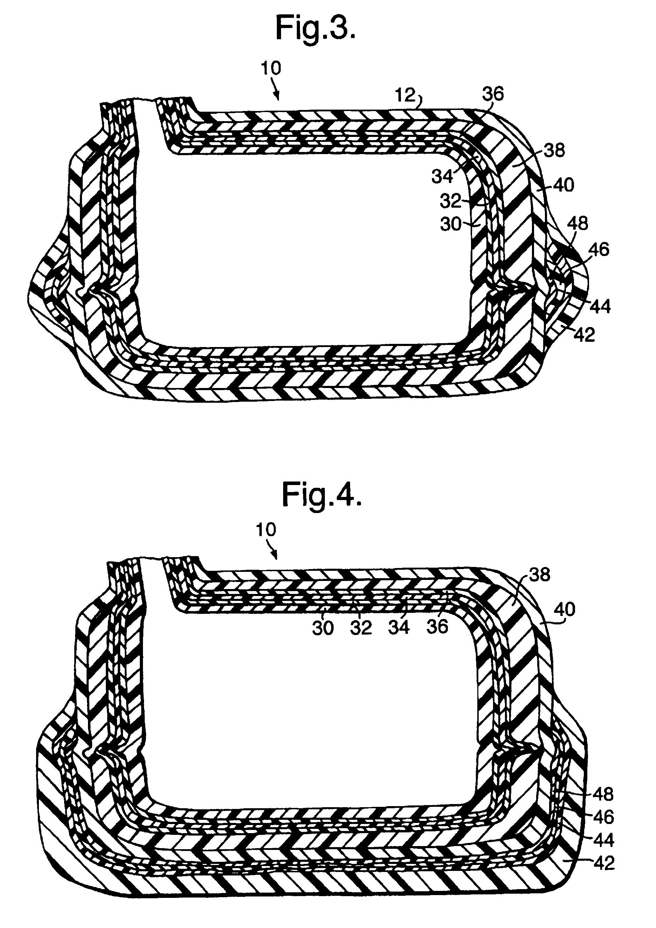

In yet another embodiment illustrated in Figure 3, the permeation barrier fuel tank 10 is formed by a conventional hot plate welding process wherein the flame resistant layer 42 and second permeation barrier layer 46 are formed and hot plated or welded to the fuel tank 10, by placing small patches in the areas susceptible to permeation and flame. It should be appreciated that hot plate welding occurs right after the fuel tank 10 is formed. It should be appreciated that the flame resistant layer 42 and the second permeation barrier layer 46 are applied over the seam and provide less permeation for a wide range of fuel including those mixed with alcohol.

In still another embodiment illustrated in Figure 4, the permeation barrier fuel tank 10 is formed in which the total lower half 14 of the fuel tank 10 is covered by the flame resistant layer 42 and the second permeation barrier layer 46 by either hot welding in a post vacuum forming operation or during the vacuum forming process. The flame resistant layer 42 and the second permeation barrier layer 46 can be introduced as a separate sheet placed on the bottom of the multi-layer co-extruded sheet and both sheets vacuum formed together or are introduced as an additional layer in the multi-layer co-extruded tank sheets. It should be appreciated that when the flame resistant layer 42 is exposed to flame, the material will swell to form a porous ceramic like flame shield, protecting the fuel tank 10 from dripping fuel or from burn or melt through.

The present invention has been described in an illustrative manner. It is to be understood that the terminology, which has been used, is intended to be in the nature of words of description rather than of limitation.

Many modifications and variations of the present invention are possible in light of the above teachings. Therefore, within the scope of the appended claims, the present invention may be practiced other than as specifically described.

## Claims

1. A permeation barrier fuel tank (10) for a vehicle comprising:
a tank shell (12) having a wall (18,20,22,24,26,28) formed from a plurality of layers (30,32,34,36,38,40);
said layers (30,32,34,36,38,40) comprising at least an inner layer (30), an outer layer (40), a first fuel permeation barrier layer (34) disposed between said inner layer (30) and said outer layer (40);
a flame resistant layer (42) disposed adjacent said outer layer (40) to retard flame and a second fuel permeation barrier layer (46) disposed between said flame resistant layer (42) and said outer layer (40).

2. A permeation barrier fuel tank (10) as set forth in claim 1 wherein said first fuel permeation barrier layer (34) is made of a hydrocarbon barrier material.

3. A permeation barrier fuel tank (10) as set forth in claim 1 wherein said inner layer (30) and said outer layer (40) are made of a polyethylene material.

4. A permeation barrier fuel tank (10) as set forth in claim 1 wherein said second fuel permeation barrier layer (46) is made of an alcohol barrier material.

5. A permeation barrier fuel tank (10) as set forth in claim 1 wherein said flame resistant layer (42) is made of a flame retardant material.

6. A permeation barrier fuel tank (10) as set forth in claim 5 wherein said flame retardant material is one of an intumescent polyethylene and chlorinated polyethylene composition.

7. A permeation barrier fuel tank (10) as set forth in claim 1 including a first adhesive layer (44) disposed between said flame resistant layer (42) and said second fuel permeation barrier layer (46).

8. A permeation barrier fuel tank (10) as set forth in claim 7 including a second adhesive layer (48) disposed between said second fuel permeation barrier layer (46) and said outer layer (40).

9. A permeation barrier fuel tank (10) as set forth in claim 1 including an adhesive layer (32,36) disposed between said first fuel permeation barrier layer (34) and said inner layer (30) and said outer layer (40).

10. A permeation barrier fuel tank (10) as set forth in claim 1 wherein said flame resistant layer (42) and said second fuel permeation barrier layer (46) are applied to a seam of said fuel tank (10).

11. A permeation barrier fuel tank (10) as set forth in claim 1 wherein said flame resistant layer (42) and second fuel permeation barrier layer (46) are applied to a lower half of said fuel tank (10).

12. A permeation barrier fuel tank (10) for a vehicle comprising:
a tank shell (12) having a wall (18,20,22,24,26,28) formed from a plurality of layers (30,32,34,36,38,40);
said layers (30,32,34,36,38,40) comprising at least an inner layer (30), an outer layer (40), a first fuel permeation barrier layer (34) disposed between said inner layer (30) and said outer layer (40);
a flame resistant layer (42) disposed adjacent said outer layer (40) to retard flame and a second fuel permeation barrier layer (46) disposed between said flame resistant layer (42) and said outer layer (40); and
said flame resistant layer (42) being one of an intumescent polyethylene and chlorinated polyethylene composition material.

13. A permeation barrier fuel tank (10) as set forth in claim 12 wherein said flame resistant layer (42) and said second fuel permeation barrier layer (46) are applied to at least a seam of said fuel tank (10).

14. A permeation barrier fuel tank (10) as set forth in claim 12 wherein said inner layer (30) and said outer layer (40) are made of a polyethylene material.

15. A permeation barrier fuel tank (10) as set forth in claim 12 wherein said first fuel permeation barrier layer (34) is made of a hydrocarbon barrier material.

16. A permeation barrier fuel tank (10) as set forth in claim 12 wherein said second fuel permeation barrier layer (46) is made of an alcohol barrier material.

17. A permeation barrier fuel tank (10) as set forth in claim 12 including a first adhesive layer (44) disposed between said flame resistant layer (42) and said second fuel permeation barrier layer (46).

18. A permeation barrier fuel tank (10) as set forth in claim 17 including a second adhesive layer (48) disposed between said second fuel permeation barrier layer (46) and said outer layer (40).

19. A permeation barrier fuel tank (10) as set forth in claim 12 including an adhesive layer (32,36) disposed between said first fuel permeation barrier layer (34) and said inner layer (30) and said outer layer (40).

20. A fuel tank (10) for a vehicle comprising:
a tank shell (12) having a wall (18,20,22,24,26,28) formed from a plurality of layers (30,32,34,36,38,40);
said layers (30,32,34,36,38,40) comprising at least an inner layer (30) and an outer layer (40) comprising a polyethylene material; and
said layers (30,32,34,36,38,40) including a first fuel permeation barrier layer (34) comprising a hydrocarbon barrier material disposed between said outer layer (40) and said inner layer (30), a flame resistant layer (42) disposed adjacent said outer layer (40) to retard flame and a second fuel permeation barrier layer (46) comprising an alcohol barrier material disposed between said flame resistant layer (42) and said outer layer (40).
